Europäisches Patentamt

European Patent Office

Office européen des brevets

(11) Publication number: **0 168 254 B1**

(12) **EUROPEAN PATENT SPECIFICATION**

(45) Date of publication of patent specification: **25.04.90**

(21) Application number: **85304964.1**

(22) Date of filing: **11.07.85**

(51) Int. Cl.⁵: **A 01 D 34/73, A 01 D 34/84, A 01 G 3/06**

(54) Line trimmer for cutting vegetation.

(30) Priority: **11.07.84 ZA 845330**
**08.02.85 ZA 850992**

(43) Date of publication of application:
**15.01.86 Bulletin 86/03**

(45) Publication of the grant of the patent:
**25.04.90 Bulletin 90/17**

(84) Designated Contracting States:
**DE FR GB IT NL**

(56) References cited:
**FR-A-2 433 279**
**US-A-4 104 796**
**US-A-4 195 408**
**US-A-4 245 454**
**US-A-4 347 666**

(73) Proprietor: **NYLON LINE CUTTERS (PTY) LTD**
**27 Moody Avenue Epping Industria**
**Cape Town Cape Province (ZA)**

(73) Proprietor: **CENTIFORCE (PTY) LTD.**
**16 Krom Street**
**Potchefstroom Transvaal Province (ZA)**

(72) Inventor: **Engelbrecht, Fillippus Theunis**
**16 Krom Street**
**Potchefstroom Transvaal Province (ZA)**
Inventor: **Smith, Cecil Rhodes**
**15 Van Rooyen Street**
**Potchefstroom Transvaal Province (ZA)**
Inventor: **Potgieter, Frederick Douglas**
**13 Villa Lethabo 554 Krige Street**
**Silvertown Pretoria Transvaal Province (ZA)**
Inventor: **Helmig, Michael Anthony**
**4 Erica Way**
**Pinelands Cape Province (ZA)**

(74) Representative: **Bayliss, Geoffrey Cyril et al**
**BOULT, WADE & TENNANT 27 Furnival Street**
**London EC4A 1PQ (GB)**

EP 0 168 254 B1

Courier Press, Leamington Spa, England.

## Description

This invention relates to the cutting of vegetation, and more particularly to the cutting of vegetation using a flexible, non-metallic cutting line extending from a rotating head and having means for automatically advancing an increment of line as it shortens.

A flexible line trimmer has a rotating head that is driven by an electrical or gasoline motor. The head includes a housing which has an aperture at its periphery. A spool is located in the housing and contains a supply of coiled 'Nylon' line. The line extends out the aperture into a cutting plane for trimming the vegetation.

Abrasion on the line during trimming causes the line to shorten fairly rapidly. Also, the line may break. In early versions of these devices, to advance additional line, the motor had to be stopped and the line physically pulled from the spool while disengaging some type of locking mechanism.

In subsequent versions, feeding an increment of line while operating became possible. Generally, these types had a line feeding mechanism in the head. When the operator bumped the head on the ground, drive teeth would disengage and re-engage to feed out an additional increment of line. While successful, it requires the operator to realize when the line is becoming short, which is not often easy. Also, some of the mechanisms tended to stick, and fail to feed out the line properly.

Recently, proposals have been made to feed out an increment of line automatically by using centrifugal force as the line shortens. The speed of the cutting head will automatically increase when the line shortens, thus increasing the centrifugal force. Devices using this principle are shown in US-A-4,285,127, US-A-4,347,666 and US-A-4,104,796.

According to the present invention there is provided apparatus comprising a head, means for rotating the head about an axis of rotation, the head including a housing having an aperture formed in its periphery, a rotor carried in the housing and serving to mount a spool which has a supply of flexible line coiled thereon and which line, in use, has a free end extending through said aperture, at least one radially extending link; a plurality of stop members located in the housing and spaced in a circular array about the axis of rotation, the link being radially outwardly of said stop members; spring means for urging the link inwardly into engagement with said stop members; mounting means for mounting the link on the rotor for radial sliding movement by increased centrifugal force outwardly from a locked position engaging one of said stop members and interconnecting the rotor and the housing for rotation in unison, to a disengaged position allowing slippage of the housing and rotor relative to each other; characterized by cam means in the housing radially outward from said stop members for engagement with said link while said link is in the disengaged position, to push said link back to the locked position once the housing has slipped by a predetermined amount with respect to the rotor.

For a better understanding of the present invention, and to show how the same may be carried into effect, reference will now be made, by way of example, to the accompanying drawings in which:

Figure 1 is a vertical sectional view of a head of an apparatus constructed in accordance with this invention.

Figure 2 is a horizontal sectional view of the apparatus of Figure 1, taken along the line 2-2 of Figure 1.

Figure 3 is a view similar to Figure 2, but showing the drive links in a disengaged position.

Figure 4 is a sectional view of the apparatus of Figure 1, taken along the line 4-4 of Figure 2.

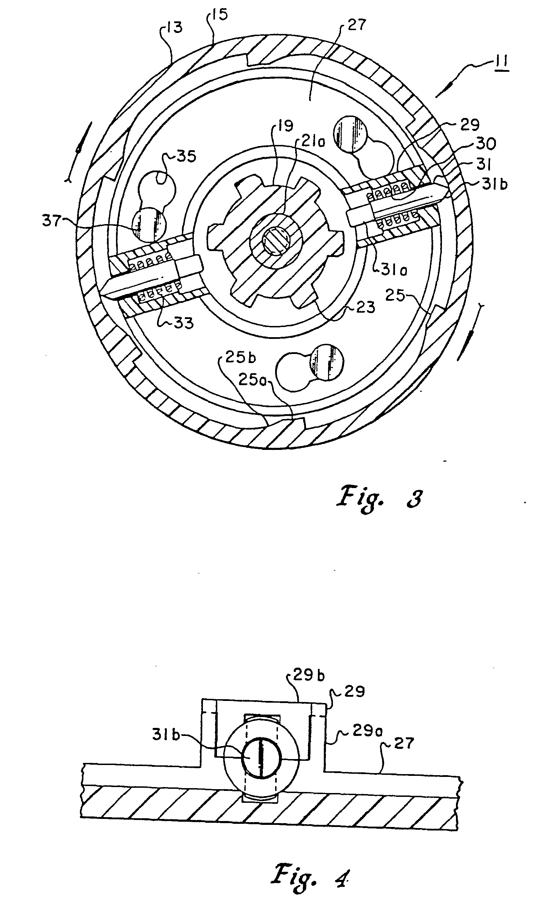

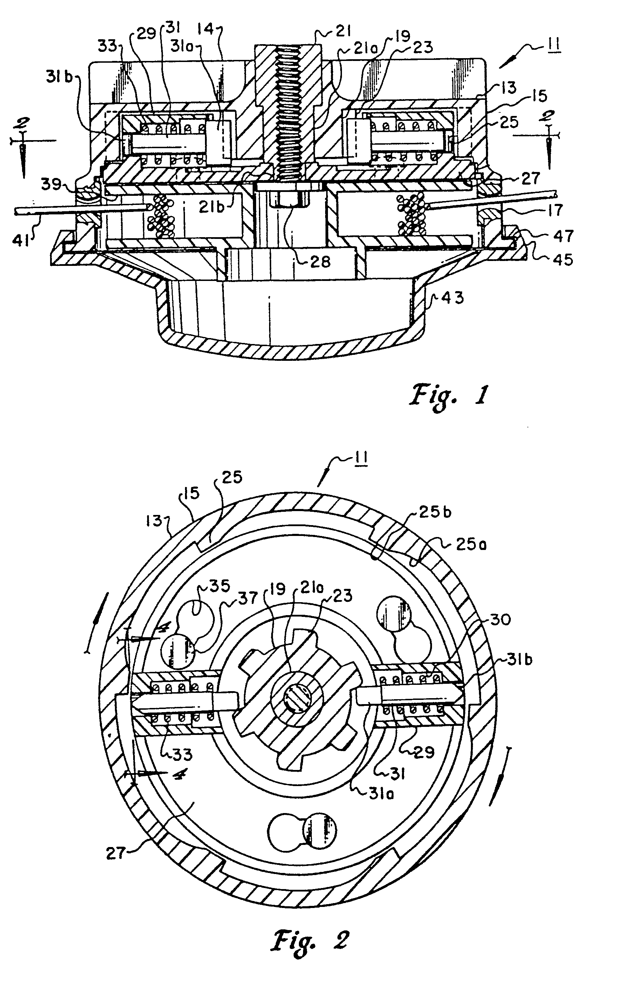

Referring to Figure 1, the apparatus includes a head 11 which is normally supported on the lower end of a handle (not shown). Head 11 includes a housing 13. Housing 13 has cooling fins 14 on its upper surface and an annular depending wall 15. Two apertures 17 are formed in wall 15 and located 180 degrees apart from each other. A hub 19 is a generally cylindrical member having a passage through it for receiving a drive shaft member 21. The drive shaft member 21 has a lower rectangular portion 21b for transmitting rotational motion from an electrical motor or gasoline engine (not shown). A cylindrical portion 21a is located at the centre of the drive shaft member 21.

Referring also to Figures 2 and 3 as well as Figure 1, a plurality of stop members in the form of teeth 23 are formed on the hub 19. Teeth 23 are spaced in a circular array around the axis of rotation of the head 11, the teeth 23 being generally rectangular. Each tooth has a bevelled corner on the leading edge thereof. A plurality of cam members 25 are located on the inner side of the wall 15 of the housing 13. There are the same number of cam members 25 as there are teeth 23. Each cam member has a ramp portion 25a which is a gradually sloping portion that extends inwardly from the inner surface of wall 15. The ramp portion terminates in an inner portion 25b which curves at the same rate as the curvature of the inner surface of the wall 15. The side surface of each cam member 25 opposite the ramp portion 25a is located on a radial line, forming a sharp corner. The ramp portion 25a extends in the same direction as the direction of rotation, as indicated by the arrow.

A rotor or spool driver 27 is carried in housing 13. Rotor 27 is basically a circular plate that is retained with the drive shaft 21 by means of a bolt 28. Bolt 28 bears against the lower end of the drive shaft member 21, with the center of the rotor 27 being located in the rectangular portion 21b of the drive shaft member 21. Rotor 27 thus always rotates with drive shaft 21, while housing 13 will slip relative to drive shaft 21 as explained subsequently.

Two mounting blocks 29 are formed on the upper surface of the rotor 27. Each mounting block 29 is a two-piece generally rectangular member (see Figure 4), having a lower portion 29a integral with rotor 27 and a cap 29b secured thereto. Each block 29 has a cavity 30 therein. A locking pin or locking link 31 is carried in each cavity along a radial line emanating from the axis of rotation of the head 11. Pin 31 has a rectangular head 31a that is adapted to be engaged by the leading surfaces of the teeth 23. The remaining portion is cylindrical, except for the outer end 31b, which has two vertical flat bevels. The bevelled end 31b is adapted to contact the cam members 25.

As shown in Figure 2, each cam member 25 is staggered rotationally a few degrees from each tooth 23. This allows the pin 31 to move under increased centrifugal force from the inward position shown in Figure 2 to a disengaging position, as shown in Figure 3. In the disengaging position, the head portion 31a will not be in contact with any of the teeth 23. The length of the pin 31 is selected so that when in contact with the inner portion 25b of a cam member 25, its head 31a will be pushed back between two of the teeth 23.

A coiled spring 33 encircles the central portion of the pin 31, and presses against the head 31a to push pin 31 inwardly. The stiffness of spring 33 and the weight of the pin 31 are selected so that centrifugal force will overcome the force of spring 33 and force the pin 31 into a disengaged position when the rotation speed has increased to a selected maximum.

In the preferred embodiment, rotor 27 has three holes 35 located in its flat surface for receiving lugs 37 formed on top of a spool 39. The lugs 37 have enlarged heads that fit through an enlarged portion of each slot 35 and slide into a narrow or elongated portion of each slot 35 to releasably retain the spool 39 with the rotor 27. The spool 39 has an annular compartment for receiving a supply of flexible line 41, with two free end portions, each extending out an aperture 17. The free ends extend into a cutting plane that is perpendicular to the axis of rotation of the head 11. Spool 39 is rigidly locked to the rotor 27 for rotation therewith. Housing 13 is free to slip relative to rotor 27 and spool 39 when the locking pins 31 are out of engagement with the teeth 23.

Referring to Figure 1, a bottom cover 43 is releasably secured to the bottom of the housing 13, enclosing the spool 39. Cover 43 has a smooth glide ball portion on the lower end. It has a lip 45 on the upper end that has four slots (not shown), each receiving a tab 47 projecting outward on the lower end of the housing 13. The cover 43 is twisted relative to housing 13 once the tabs 47 are in the slots, to releasably lock the cover 43 to the housing 13.

In operation, the power source (not shown) rotates the drive shaft member 21, which in turn rotates the rotor 27 and spool 39. The forces acting on the lines 41 are transferred to the housing 13 at the regions of the apertures 17, and tend to advance the housing 13 clockwise, as viewed in Figures 1 and 2, with respect to the spool. This is the direction of relative movement which tends to unwind the line. However, the pins 31 are in their innermost positions and thus advance of the housing can only continue until two opposed teeth 23 encounter the pins 31. In Figure 2 the housing is shown in its most advanced position with respect to the spool.

As the line 41 shortens, the rotational speed of the head 11 will increase. The higher rotational speed applies additional centrifugal force on the pins 31. At a maximum selected rotational speed and minimum selected cutting line length, the centrifugal force will overcome the force of the springs 33, moving both pins 31 outwardly. As the head portions 31a clear the teeth 23, housing 13 is disengaged from the rotor 27. The forces on the housing emanating from the line now cause it to advance clockwise with respect to the spool. The apertures 17 thus, in effect, move around the spool in the opposite direction to that in which the spool is wound. This causes line 41 to uncoil, feeding out an additional increment of line.

As the pins 31 disengage from the teeth 23, they move out and contact the inner surface of the housing wall 15. The slippage of housing 13 with respect to the rotor 27 causes the pin ends 31b to slide along the inner surface of wall 15 into contact with the ramps 25a. The ramps 25a push the pins 31b back inwardly. Once the end portion 31b has reached the inner surface 25b of the cam members 25, the head 31a will be back located between two of the teeth 23. Also, the additional line fed out will have slowed the rotational speed down such that the spring 33 will overcome the centrifugal force. The head 31a will contact with one of the teeth 23 thus preventing further slippage of the housing with respect to the spool. When the line again shortens, the cycle is repeated.

The above described structure has significant advantages. Line is fed out automatically when it shortens, avoiding the need for the operator to detect when the line is too short. The cam members, with the ramp portions, assures that only a predetermined increment of line will be fed out each time.

## Claims

1. Apparatus comprising a head (11), means for rotating the head about an axis of rotation, the head including a housing (13) having an aperture (17) formed in its periphery, a rotor (27) carried in the housing and serving to mount a spool (39) which has a supply of flexible line (41) coiled thereon and which line, in use, has a free end extending through said aperture, at least one radially extending link (31); a plurality of stop members (23) located in the housing and spaced in a circular array about the axis of rotation, the link being radially outwardly of said stop members; spring means (33) for urging the link inwardly into engagement with said stop members; mounting means (29) for mounting the link on the rotor for radial sliding movement by increased centrifugal force outwardly from a locked position engaging one of said stop members and interconnecting the rotor and the housing for rotation in unison, to a disengaged position allowing slippage of the housing and rotor relative to each other; characterized by cam means (25) in the housing radially outward from said stop members for engagement with said link while said link is in the disengaged position, to push said link back to the locked position once the housing has slipped by a predetermined amount with respect to the rotor.

2. The apparatus according to claim 1, characterized in that the cam means comprises a plurality of cam members located on an inner wall of the housing, each having a ramp portion (25a) that curves inwardly from the inner wall for moving the link back inwardly as the housing and spool slip relative to each other.

3. The apparatus according to claim 2, characterized in that said plurality of stop members (23) are located on a hub (19) forming part of the housing.

4. Apparatus according to claim 3, characterized in that the cam members are staggered in the circumferential direction with respect to the stop members, there being a pair of links radially mounted on the rotor 180 degrees apart from each other, and the cam members serving to urge the links radially inwardly during slippage.

5. Apparatus according to claim 4, characterized in that each link is a pin having a bevelled portion (31b) on its outer end, and the spring means comprises a coil spring (33) encircling each pin.

**Patentansprüche**

1. Vorrichtung mit einem Kopf (11), mit Mitteln zur Drehung des Kopfes um eine Drehachse, wobei der Kopf ein Gehäuse (13) mit einer Öffnung (17) in seinem Umfang umfaßt, mit einem in dem Gehäuse angeordneten Rotor (27), der als Träger für eine Spule (39) und einen darauf aufgewickelten Schnurvorrat (41) dient, welche Schnur sich im Gebrauch mit einem freien Ende durch die Öffnung erstreckt, und mit wenigstens einem sich in radialer Richtung erstreckenden Glied (31); eine Anzahl von in dem Gehäuse angeordneten Anschlägen (23), die voneinander beabstandet kreisförmig um die Drehachse vorgesehen sind, wobei das Glied sich radial weiter außen als die Anschläge befindet; ein Federmittel (33), das das Glied nach innen in Eingriff mit den Anschlägen drückt; Aufnahmemittel (29) zur Halterung des Gliedes auf dem Rotor zur radial gleitenden Bewegung bei erhöhter Zentrifugalkraft aus einer eingekuppelten Stellung, bei der es in Eingriff mit einer der Anschläge steht und den Rotor mit dem Gehäuse kuppelt, so daß beide sich gemeinsam drehen, heraus in eine ausgekuppelte Stellung, in der sich das Gehäuse und der Rotor relativ zueinander verdrehen können, gekennzeichnet durch ein in dem Gehäuse radial weiter außen als die Anschläge befindliches Nockenmittel (25), das in Eingriff mit dem Glied gelangt, während sich dieses in der ausgekuppelten Stellung befindet, um das Glied in die eingekuppelte Stellung zurückzuschieben, sobald das Gehäuse sich um einen vorgegebenen Betrag gegenüber dem Rotor verdreht hat.

2. Vorrichtung nach Anspruch 1, dadurch gekennzeichnet, daß das Nockenmittel eine Anzahl von an einer Innenwand des Gehäuses angeordneten Nocken umfaßt, von denen jeder eine Schrägfläche (25a) hat, die sich von der Innenwand nach innen wölbt um das Glied nach innen zurückzubewegen, wenn das Gehäuse und die Spule sich relativ zueinander verdrehen.

3. Vorrichtung nach Anspruch 2, dadurch gekennzeichnet, daß die Anschläge (23) sich auf einer Nabe (19) befinden, die Teil des Gehäuses ist.

4. Vorrichtung nach Anspruch 3, dadurch gekennzeichnet, daß die Nocken in Umfangsrichtung gegenüber den Anschlägen versetzt sind, wobei zwei Glieder radial auf dem Rotor um 180° versetzt angeordnet sind und die Nocken dazu dienen, die Gieder während der relativen Verdrehung radial nach innen zu drücken.

5. Vorrichtung nach Anspruch 4, dadurch gekennzeichnet, daß jedes Glied aus einem Stift besteht, der an seinem nach außen weisenden Ende einen abgeschrägten Teil (31b) hat, und daß das Federmittel eine jeden Stift umschließende Schraubenfeder (33) umfaßt.

**Revendications**

1. Appareil comprenant une tête (11), un dispositif pour faire tourner la tête autour d'un axe de rotation, la tête comprenant un boîtier (13) comportant une ouverture (17) ménagée sur sa périphérie, un rotor (27) disposé dans le boîtier et destiné à recevoir une bobine (39) qui est garnie d'une ligne flexible (41) enroulée sur celle-ci une extrémité libre de ladite ligne passant par ladite ouverture pendant l'utilisation, au moins un ergot (31) faisant saillie radialement; une pluralité de butées (23) situées dans le boîtier et distribuées circulairement autour de l'axe de rotation, l'ergot étant situé radialement vers l'extérieur par rapport aux dites butées; un dispositif à ressort (33) pour repousser l'ergot vers l'intérieur de manière à ce qu'il s'engage avec lesdites butées; un dispositif de montage (29) pour fixer l'ergot sur le rotor de telle sorte qu'il permette un mouvement radial coulissant vers l'extérieur sous l'effet de l'augmentation de la force centrifuge, pour passer d'une position verrouillée par l'engagement de l'ergot avec l'une desdites butées, le rotor et le boîtier étant de ce fait accouplés pour tourner ensemble, à une position débrayée qui permet une désolidarisation du boîtier et du rotor et un glissement en rotation de l'un par rapport à l'autre; caractérisé par un dispositif, prévu dans le boîtier, de cames (25), situées radialement vers l'extérieur par rapport aux dites butées pour s'engager avec ledit ergot lorsque celui-ci est dans une position débrayée, de manière à repousser ledit ergot vers une position de verrouillage lorsque le boîtier glisse en rotation par rapport au rotor d'une valeur prédéterminée.

2. Appareil selon la revendication 1, caractérisé en ce que le dispositif de cames se compose d'une pluralité de cames localisées sur la paroi interne du boîtier' chacune comportant une portion en forme de rampe (25a) qui s'incurve intérieurement depuis la paroi interne du boîtier pour repousser l'ergot vers l'intérieur lorsque le boîtier et la bobine glissent en rotation l'un par rapport à l'autre.

3. Appareil selon la revendication 2, caractérisé en ce que l'ensemble des butées (23) précédemment décrites sont situées sur un moyeu (19), qui fait partie du boîtier.

4. Appareil selon la revendication 3, caractérisé en ce que les cames sont disposées dans le même plan de circonférence que les butées, une paire d'ergots étant montée radialement sur le rotor avec un décalage angulaire de 180 degrés entre eux, les cames servant à repousser les ergots radialement vers l'intérieur lors du glissement en rotation.

5. Appareil selon la revendication 4, caractérisé en ce que chaque ergot est un axe ayant une partie biseautée (31b) sur son extrémité extérieure et en ce que le dispositif à ressort comprend un ressort à spirale (33) emmanché sur chaque axe.

Fig. 3

Fig. 4

1

Fig. 1

Fig. 2